# EUROPÄISCHE PATENTSCHRIFT

(11) **EP 3 806 989 B1**
(45) Veröffentlichungstag und Bekanntmachung des Hinweises auf die Patenterteilung: **08.06.2022**
(21) Anmeldenummer: 19752462.2
(22) Anmeldetag: 05.08.2019
(51) Int. Cl.: B01F 27/117, B01F 27/25, C02F 3/12, B01F 101/00

(54) **TAUCHRÜHRVORRICHTUNG ZUM UMWÄLZEN VON TRINKWASSER**
SUBMERSIBLE AGITATOR DEVICE FOR CIRCULATING DRINKING WATER
AGITATEUR SUBMERSIBLE POUR LA CIRCULATION D'EAU POTABLE

(30) Priorität: 06.08.2018 DE 102018119039
(43) Veröffentlichungstag der Anmeldung: 21.04.2021
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Dr. Gassner & Partner mbB
(86) Internationale Anmeldenummer: PCT/EP2019/071029
(87) Internationale Veröffentlichungsnummer: WO 2020/030596

(56) Entgegenhaltungen:
- EP-A1- 2 175 973
- CN-U- 204 848 468
- DE-A1-102007 013 630
- HÖFKEN M ET AL: "Rühr- und Begasungssysteme für die effektive Abwasserbehandlung", BRAUINDUSTRIE , Bd. 2 28. Februar 1998 (1998-02-28), Seiten 91-95, XP002496266, ISSN: 0341-7115 Gefunden im Internet: URL:http://fzarchiv.sachon.de/index.php?pd f=Fachzeitschriften/Getraenke-Fachzeitschr iften/Brauindustrie/1998/02_98/Bi_02-98_Ru ehr-_und_Begasungssysteme_fuer_Abwasserbeh andlung.pdf [gefunden am 1077-01-01]

## Beschreibung

Die Erfindung betrifft eine Tauchrührvorrichtung zum Umwälzen von Trinkwasser, umfassend einen Tauchmotor mit einem Gehäuse, von dessen einem Ende sich eine Welle erstreckt, einen an der Welle angebrachten Hyperboloid-Rührkörper sowie eine Stützkonstruktion zum Abstützen der Tauchrührvorrichtung auf dem Boden eines Beckens.

Eine solche Tauchrührvorrichtung wird von der Anmelderin unter dem Zeichen "Hyperdive-Mixer" angeboten. Sie dient der Umwälzung insbesondere von Abwasser in einem Klärbecken.

Die DE 10 2007 013 630 A1 offenbart eine Tauchrührvorrichtung zum Umwälzen von Trinkwasser, umfassend einen Tauchmotor mit einem zylindrischen Gehäuse, von dessen einen Ende sich eine Welle erstreckt, einen an der Welle angebrachten Hyperboloid-Rührkörper, einen Rahmen mit mehreren mit dem Gehäuse verbundenen Stützen, wobei die Stützen radial nach außen umbiegende Umbiegungsabschnitte aufweisen, welche sich über einen Umfangsrand des Hyperboloid-Rührkörpers zum Abstützen des Rahmens auf einen Boden erstrecken, und ein in Draufsicht ringartig ausgestaltetes Strömungsleitelement, welches an den Umbiegungsabschnitten der Stützen angebracht ist, wobei an einer dem Tauchmotor zugewandten Oberseite des Hyperboloid-Rührkörpers Transportrippen vorgesehen sind, welche sich in radialer Richtung erstrecken und zum Umfangsrand hin in eine erste tangentiale Richtung umbiegen.

In Trinkwasserspeichern besteht das Risiko der Ausbildung von Wasserschichten mit unterschiedlichen Temperaturen. Zwischen derartigen Wasserschichten besteht kein nennenswerter Flüssigkeitsaustausch. Infolgedessen kann es zur Algenbildung, Nachverkeimung und/oder zu einer unkontrollierten chemischen Konzentration kommen. Zur Vermeidung der vorgenannten Nachteile wird in einem Trinkwasserspeicher aufgenommenes Trinkwasser mittels einer Rührvorrichtung umgewälzt.

Aufgabe der vorliegenden Erfindung ist es, eine Tauchrührvorrichtung zum Umwälzen von Trinkwasser anzugeben, welche eine verbesserte Rühreffizienz aufweist.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

Nach Maßgabe der Erfindung wird eine Tauchrührvorrichtung zum Umwälzen von Trinkwasser vorgeschlagen, umfassend:
einen Tauchmotor mit einem zylindrischen Gehäuse, von dessen einen Ende sich eine Welle erstreckt,
einen an der Welle angebrachten Hyperboloid-Rührkörper,
einen Rahmen mit mehreren sich entlang des Gehäuses erstreckenden und mit dem Gehäuse verbundenen Stützen, wobei die Stützen radial nach außen umbiegende Umbiegungsabschnitte aufweisen, welche sich über einen Umfangsrand des Hyperboloid-Rührkörpers zum Abstützen des Rahmens auf einen Boden erstrecken, und
ein in Draufsicht ringartig ausgestaltetes Strömungsleitelement, welches an den Umbiegungsabschnitten der Stützen angebracht ist.

Die vorgeschlagene Tauchrührvorrichtung ist einfach und kompakt aufgebaut. Wegen des Vorsehens des ringartig ausgestalteten Strömungsleitelements werden Rund- oder Spiralwirbel am Umfang des Hyperboloid-Rührkörpers vermieden. Infolgedessen weist die vorgeschlagene Tauchrührvorrichtung eine besonders hohe Rühreffizienz auf, d. h. eine vorgegebene Menge an Trinkwasser kann mit der vorgeschlagenen Tauchrührvorrichtung mit vermindertem Energieaufwand umgewälzt werden.

Erfindungsgemäss sind an einer dem Tauchmotor zugewandten Oberseite des Hyperboloid-Rührkörpers Transportrippen vorgesehen, welche sich in radialer Richtung erstrecken und zum Umgangsrand hin in eine erste tangentiale Richtung umbiegen. Die vorgeschlagene Ausgestaltung der Transportrippen trägt weiter zur Erhöhung der Effizienz der Tauchrührvorrichtung bei. Bei einer Rotation des Hyperboloid-Rührkörpers wird eine auf dessen Oberseite gerichtete Strömung erzeugt, welche zum Umfangsrand hin in eine radiale Richtung abbiegt.

Das Strömungsleitelement ist vorteilhafterweise auf die Umbiegungsabschnitte abgestützt. Es kann aber auch an einer dem Hyperboloid-Rührkörper zugewandten Unterkante der Umbiegungsabschnitte angebracht sein. Es ist zweckmäßigerweise mit den Umbiegungsabschnitten verschweißt.

Vorteilhafterweise verjüngt sich das Strömungsleitelement in Richtung zum Gehäuse hin konisch. Das trägt dazu bei, dass unerwünschte Wirbel, insbesondere Rund- oder Spiralwirbel, vermieden werden.

Nach einer weiteren vorteilhaften Ausgestaltung umfasst der Rahmen genau drei Stützen. Die vorgeschlagene Konstruktion des Rahmens ist einfach und kompakt. Abgesehen davon wird damit eine kippsichere Abstützung der Tauchrührvorrichtung auf dem Boden eines Beckens gewährleistet.

Erfindungsgemäss biegen die Umbiegungsabschnitte der Stützen in Draufsicht auf die Oberseite des Rührelements in eine der ersten tangentialen Richtung entgegengesetzte zweite tangentiale Richtung um. Die zweite tangentiale Richtung entspricht im Wesentlichen der Richtung des vom Umfangsrand des Rührkörpers abströmenden Wassers. Mit der vorgeschlagenen Ausgestaltung wird weiter der Ausbildung unerwünschter Strömungshindernisse und damit von Wirbeln entgegengewirkt. Damit kann weiter die Effizienz der vorgeschlagenen Tauchrührvorrichtung erhöht werden.

Nach einer weiteren Ausgestaltung sind die Stützen an einem dem wellenseitigen einen Ende entgegengesetzten anderen Ende des Gehäuses mittels eines Verbindungselements miteinander verbunden. Das ermöglicht eine einfache Anbringung eines Seils zum Heben und Senken der vorgeschlagenen Tauchrührvorrichtung. Der Hyperboloid-Rührkörper ist zweckmäßigerweise in einem Stück mit den Transportrippen als Gussteil aus rostfreiem Stahl hergestellt. Desgleichen können das Gehäuse, das Strömungsleitelement und der Rahmen aus rostfreiem Stahl hergestellt sein. Als Edelstahl wird vorzugsweise ein Stahl der Zusammensetzung X6CrNiMoTi17-12-2 verwendet. Daneben kann auch ein Stahl mit der Zusammensetzung X2CrNiMo17-12-2 verwendet werden. Derartige Stähle eignen sich besonders für die Umwälzung von Trinkwasser in Trinkwasserspeichern.

Nachfolgend wird ein Ausführungsbeispiel der Erfindung anhand der Zeichnungen näher erläutert. Es zeigen:

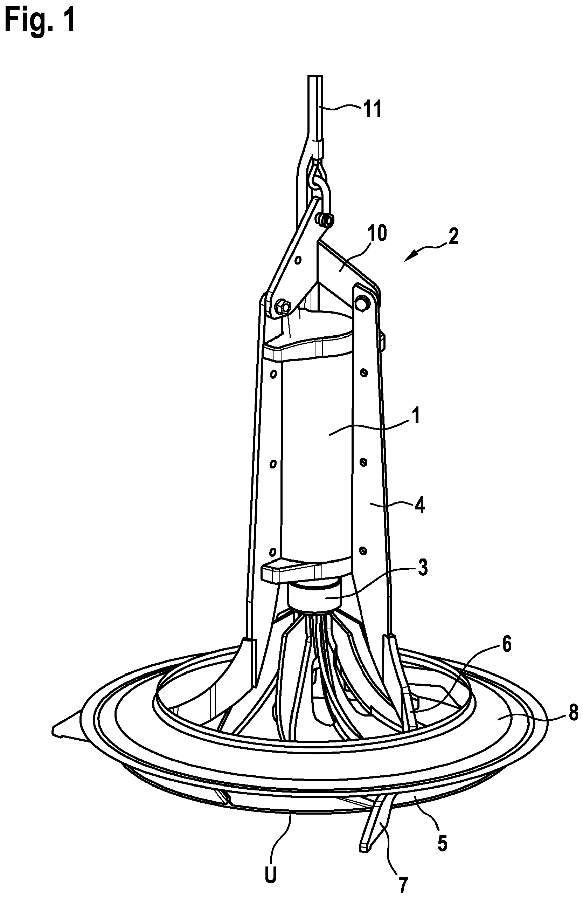

Fig. 1 eine perspektivische Ansicht einer Tauchrührvorrichtung,

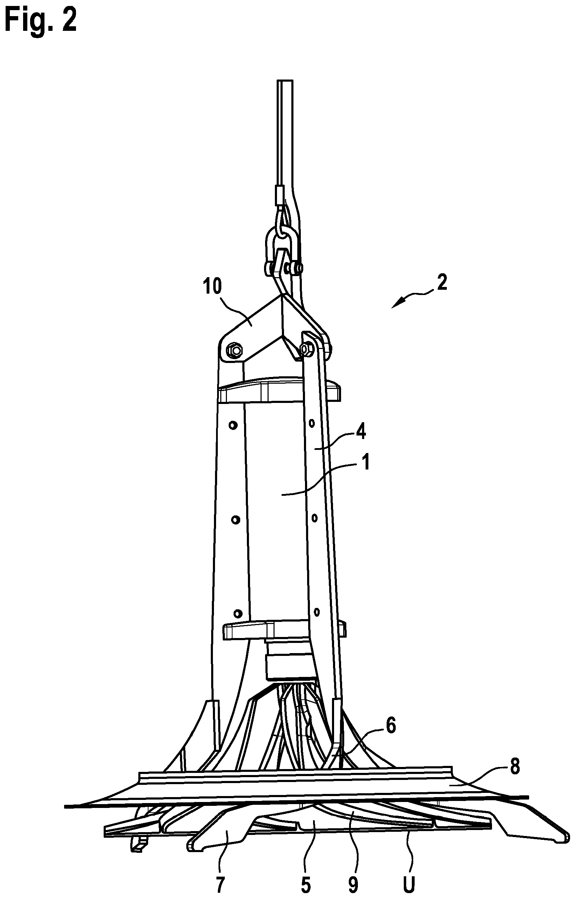

Fig. 2 eine Seitenansicht gemäß Fig. 1,
Fig. 3 eine Draufsicht gemäß Fig. 1, und
Fig. 4 eine Unteransicht gemäß Fig. 1.

Bei der in den Figuren gezeigten Tauchrührvorrichtung ist ein Tauchmotor an einem allgemein mit dem Bezugszeichen 2 bezeichneten Rahmen angebracht. Vom Tauchmotor, welcher ein zylindrisches Gehäuse 1 aufweist, erstreckt sich eine Welle 3. An der Welle 3 ist ein Hyperboloid-Rührkörper 5 angebracht. Ein solcher Hyperboloid-Rührkörper 5 ist beispielsweise aus der DE 10 2013 225 658 A1 bekannt.

Der Rahmen 2 umfasst mehrere sich entlang des Gehäuses 1 erstreckende und mit dem Gehäuse 1 verbundene Stützen 4. Die Stützen 4 erstrecken sich über das Gehäuse 1 hinweg in Richtung des Hyperboloid-Rührkörpers 5. Die Stützen 4 weisen in einem oberhalb des Hyperboloid-Rührkörpers 5 befindlichen Abschnitt radial nach außen biegende Umbiegungsabschnitte 6 auf. Die Umbiegungsabschnitte 6 erstrecken sich über einen Umfangsrand U des Hyperboloid-Rührkörpers 5 hinweg und weisen an deren Ende jeweils einen Fuß 7 zum Abstützen des Rahmens 2 auf einem Boden auf.

Auf den Umbiegungsabschnitten 6 ist ein in Draufsicht ringartig ausgestaltetes Strömungsleitelement 8 abgestützt. Das Strömungsleitelement 8 ist fest mit den Umbiegungsabschnitten 6, beispielsweise mittels Schweißen, verbunden.

Der Hyperboloid-Rührkörper 5 weist an einer dem Gehäuse 1 zugewandten Oberseite Transportrippen 9 auf. Der Hyperboloid-Rührkörper 5 ist zweckmäßigerweise als Gussteil aus einem nichtrostenden Stahl in einem Stück mit den Transportrippen 9 hergestellt.

Die Transportrippen 9 erstrecken sich entlang der Oberfläche des Hyperboloid-Rührkörpers 5 ausgehend von der Welle 3 zunächst in eine radiale Richtung. Sie biegen dann zum Umfangsrand U hin in eine erste tangentiale Richtung um.

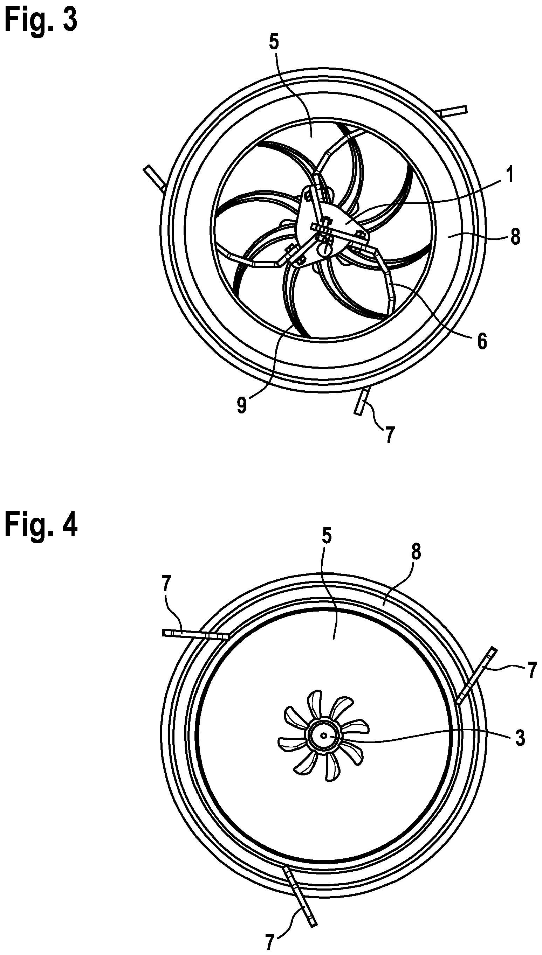

Wie insbesondere aus Fig. 3 hervorgeht, biegen die Umbiegungsabschnitte 6 der Stützen 4 in Draufsicht auf die Oberseite des Hyperboloid-Rührkörpers 5 in eine der ersten tangentialen Richtung entgegengesetzte zweite tangentiale Richtung um. Das Strömungsleitelement 8 verjüngt sich in Richtung zum Gehäuse 1 konisch. Mit dem Bezugszeichen 10 ist ein Verbindungselement bezeichnet, welches die Stützen 4 an einem dem wellenseitigen einen Ende entgegengesetzten anderen Ende des Gehäuses 1 miteinander verbindet. Am Verbindungselement 10 kann ein Seil zum Heben und Senken der Tauchrührvorrichtung angebracht sein.

Die Funktion der Tauchrührvorrichtung ist Folgende:
Mittels des Tauchmotors wird der Hyperboloid-Rührkörper 5 im Uhrzeigersinn rotiert. Infolgedessen bildet sich eine Strömung aus, welche auf die Oberseite des Hyperboloid-Rührkörpers 5 gerichtet ist. Die Strömung tritt durch das Strömungsleitelement 8 hindurch. Sie wird durch die Wirkung des Strömungsleitelements 8 sowie die Wirkung des Hyperboloid-Rührkörpers 5 in eine radiale Richtung umgelenkt. Die Strömung zirkuliert beim Abströmen vom Umfangsrand U ebenfalls im Uhrzeigersinn. Wegen der in eine zweite tangentiale Richtung ausgebildeten Umbiegung der Umbiegungsabschnitte 6 wird der abströmenden Strömung ein nur sehr geringer Widerstand entgegengesetzt. Durch die Wirkung des Strömungsleitelements 8 wird die Ausbildung von Spiralwirbeln vermieden. Mit der vorgeschlagenen Tauchrührvorrichtung kann mit verbesserter Effizienz Trinkwasser in einem Trinkwasserbehälter umgewälzt werden. Zum Umwälzen ist wegen der erfindungsgemäß vorgeschlagenen Ausgestaltung weniger elektrische Energie erforderlich als bei herkömmlichen Tauchrührvorrichtungen.

### Bezugszeichenliste

- 1: Gehäuse
- 2: Rahmen
- 3: Welle
- 4: Stütze
- 5: Hyperboloid-Rührkörper
- 6: Umbiegungsabschnitt
- 7: Fuß
- 8: Strömungsleitelement
- 9: Transportrippe
- 10: Verbindungsabschnitt

- U: Umfangsrand

## Patentansprüche

1. Tauchrührvorrichtung zum Umwälzen von Trinkwasser, umfassend einen Tauchmotor mit einem zylindrischen Gehäuse (1), von dessen einen Ende sich eine Welle (3) erstreckt,
einen an der Welle (3) angebrachten Hyperboloid-Rührkörper (5),
einen Rahmen (2) mit mehreren sich entlang des Gehäuses (1) erstreckenden und mit dem Gehäuse (1) verbundenen Stützen (4), wobei die Stützen (4) radial nach außen umbiegende Umbiegungsabschnitte (6) aufweisen, welche sich über einen Umfangsrand (U) des Hyperboloid-Rührkörpers (5) zum Abstützen des Rahmens (2) auf einen Boden erstrecken,
ein in Draufsicht ringartig ausgestaltetes Strömungsleitelement (8), welches an den Umbiegungsabschnitten (6) der Stützen (4) angebracht ist,
wobei an einer dem Tauchmotor zugewandten Oberseite des Hyperboloid-Rührkörpers (5) Transportrippen (9) vorgesehen sind, welche sich in radialer Richtung erstrecken und zum Umfangsrand (U) hin in eine erste tangentiale Richtung umbiegen, und
wobei die Umbiegungsabschnitte (6) der Stützen (4) in Draufsicht auf die Oberseite des Hyperboloid-Rührkörpers (5) in eine der ersten tangentialen Richtung entgegengesetzte zweite tangentiale Richtung umbiegen.

2. Tauchrührvorrichtung nach Anspruch 1, wobei das Strömungsleitelement (8) sich in Richtung zum Gehäuse (1) hin konisch verjüngt.

3. Tauchrührvorrichtung nach einem der vorhergehenden Ansprüche, wobei der Rahmen (2) genau drei Stützen (4) umfasst.

4. Tauchrührvorrichtung nach einem der vorhergehenden Ansprüche, wobei die Stützen (4) an einem dem wellenseitigen einen Ende entgegengesetzten anderen Ende des Gehäuses (1) mittels eines Verbindungelements (10) miteinander verbunden sind.

5. Tauchrührvorrichtung nach einem der vorhergehenden Ansprüche, wobei der Hyperboloid-Rührkörper (5) in einem Stück mit den Transportrippen (9) als Gussteil aus rostfreiem Stahl hergestellt ist.

6. Tauchrührvorrichtung nach einem der vorhergehenden Ansprüche, wobei das Gehäuse (1), das Strömungsleitelement (8) und der Rahmen (2) aus rostfreiem Stahl hergestellt sind.

## Claims

1. A submersible agitator device for circulating drinking water, comprising
a submersible motor comprising a cylindrical housing (1), from one end of which there extends a shaft (3),
a hyperboloid agitator (5) mounted on the shaft (3),
a frame (2) with a plurality of supports (4) extending along the housing (1) and connected to the housing (1), wherein the supports (4) have radially outwardly angled bend portions (6), which extend over a peripheral edge (U) of the hyperboloid agitator body (5) in order to support the frame (2) on a base,
a flow-guiding element (8), which is annular in plan view and which is mounted on the bend portions (6) of the supports (4),
wherein transport ribs (9) are provided on an upper side of the hyperboloid agitator body (5) facing the submersible motor and extend in the radial direction and bend towards the peripheral edge (U) in a first tangential direction and
wherein, in a plan view of the upper side of the hyperboloid agitator element (5), the bend portions (6) of the supports (4) bend in a second tangential direction opposite the first tangential direction.

2. The submersible agitator device according to claim 1, wherein the flow-guiding element (8) tapers conically in the direction of the housing (1).

3. The submersible agitator device according to any one of the preceding claims, wherein the frame (2) comprises precisely three supports (4).

4. The submersible agitator device according to any one of the preceding claims, wherein the supports (4) are connected to one another by means of a connection element (10) at another end of the housing (1) opposite the shaft-side end.

5. The submersible agitator device according to any one of the preceding claims, wherein the hyperboloid agitator body (5) is made from stainless steel in one piece with the transport ribs (9) in the form of a cast part.

6. The submersible agitator device according to any one of the preceding claims, wherein the housing (1), the flow-guiding element (8) and the frame (2) are made from stainless steel.

## Revendications

1. Agitateur submersible pour la circulation d'eau potable, comprenant
un moteur submersible à boîtier (1) cylindrique, à une extrémité duquel s'étend un arbre (3),
un corps d'agitation hyperboloïde (5) monté sur l'arbre (3),
un cadre (2) pourvu d'une pluralité de supports (4) s'étendant le long du boîtier (1) et reliés au boîtier (1), les supports (4) comportant des parties repliables (6) repliables radialement vers l'extérieur qui s'étendent sur un bord périphérique (U) du corps d'agitation hyperboloïde (5) pour supporter le cadre (2) sur un sol,
un élément de guidage d'écoulement (8) conçu en forme d'anneau en vue en plan qui est monté sur les parties repliables (6) des supports (4), en ce que des nervures de transport (9) sont prévues sur une face supérieure du corps d'agitation hyperboloïde (5) qui est orientée vers le moteur submersible, lesdites nervures de transport s'étendant dans un sens radial et se repliant vers le bord périphérique (U) dans un premier sens tangentiel, et
en ce que les parties repliables (6) des supports (4) en vue en plan sur la face supérieure du corps d'agitation hyperboloïde (5) se replient dans un second sens tangentiel opposé au premier sens tangentiel.

2. Agitateur submersible selon la revendication 1, en ce que l'élément de guidage d'écoulement (8) se rétrécit en cône vers le boîtier (1).

3. Agitateur submersible selon l'une des revendications précédentes, en ce que le cadre (2) comporte exactement trois supports (4).

4. Agitateur submersible selon l'une des revendications précédentes, en ce que les supports (4) sont reliés entre eux à une autre extrémité du boîtier (1) opposée à une extrémité côté arbre au moyen d'un élément de raccordement (10).

5. Agitateur submersible selon l'une des revendications précédentes, en ce que le corps d'agitation hyperboloïde (5) est fabriqué en une seule pièce avec les nervures de transport (9) sous forme de pièce moulée en acier inoxydable.

6. Agitateur submersible selon l'une des revendications précédentes, en ce que le boîtier (1), l'élément de guidage d'écoulement (8) et le cadre (2) sont fabriqués en acier inoxydable.
